# EUROPEAN PATENT APPLICATION

(11) **EP 4 726 235 A1**
(43) Date of publication of application: **15.04.2026**
(21) Application number: 24206159.6
(22) Date of filing: 11.10.2024
(51) Int. Cl.: F16H 37/08, B60K 6/365, B60K 6/448, B60K 6/543, F16H 37/10

(54) **CONTINOUS AND REVERSIBLE MECHANICAL TRANSMISSION SYSTEM**

(71) Applicant: Powertrack Internacional de Automoción, S.L., 31500 Tudela (ES)
(72) Inventor: ARRONDO GIL, Ricardo, 31500 Tudela (ES)
(74) Representative: Isern Patentes y Marcas S.L.

(57) **Abstract**

The present invention provides a continuous mechanical transmission system with which it is possible to take advantage of the recirculated power in epicyclic gears by means of an electric machine that captures said power and injects it directly as power into the output shaft of an engine, or accumulates it in batteries for later use. The system comprises a primary shaft, a continuously variable transmission connected to a secondary shaft, and a set of epicyclic gears. A beta gear is connected to the first epicyclic gear, while an alpha gear is connected to the secondary shaft and meshes with the beta gear. In addition, an electric machine is linked to the secondary shaft and can supply power to an energy accumulator or the output shaft.

## Description

### Technical field of the invention

The present invention relates to a continuous and reversible infinite mechanical transmission system comprising a continuously variable transmission, in addition to epicyclic gears that add and subtract speeds, performing a differential function and with power plants or generators located on different shafts of the system.

### State of the art

Vehicles for the transport of people or goods with a mean maximum authorised mass have generally, until now, been equipped with relatively high-displacement Diesel engines with a high torque at low engine speeds to allow the vehicle to start without over-revving the engine. These vehicles are class M2 passenger vehicles (mass less than 5000 kg and more than 8 passengers) or the heaviest class N1 vehicles (maximum mass less than 3500 kg).

Vehicles of this type do not require very high power, since they have a limited maximum speed, nor do they require high accelerations; in contrast, they do require a relatively high torque at low engine revolutions (RPM), to allow frequent starts and stops without having to increase the engine revolutions too much, which prevents subjecting the clutch or torque converter to severe operating conditions.

For this reason, vehicles of this class have turbocharged diesel engines.

These engines are in many cases relatively outdated, resulting in very high particulate and NOx pollutant emissions, or have emission control systems (FAP and SCR catalytic converters) that complicate engine operation, especially if the engine is used intensively in city driving.

In view of the above, two possible solutions arise:
- Conversion of engines to run on hydrogen
- Replacing engines with non-Diesel power plants that are more modern, cleaner and more efficient, and that are compatible with conversion to hydrogen.

A low-displacement non-Diesel power plant has the problem that, at low engine revolutions, the thermal engine develops a very low torque. This low torque can be supported with the assistance of an electric engine. This torque is sufficient for the smooth start of vehicles of relatively low mass, around 1500 kg, but, even with the support of the electric engine, the torque would still be very low for vehicles around 3500 kg, such as class M2 passenger vehicles or heavier N1 class vehicles, as mentioned above.

This means that the clutch undergoes very severe operating conditions, as the engine must be at high revolutions to produce the torque, so at the moment of engagement there will be a significant rotational speed difference between the engine and the gearbox.

For this reason, low-displacement hybrid engines that would allow for clean and efficient use in city and open road driving are not normally used in heavy duty vehicles.

Given the aforementioned problems, it is clear that there is a need to provide a transmission system that allows the use of this type of low-displacement plants in vehicles with a high mass, such as passenger transport vehicles, to improve their efficiency as well as the emission of polluting gases.

### DESCRIPTION

To respond to the detected need, the present invention provides a continuous mechanical transmission system, as disclosed in claim 1. The objective of the invention is a transmission system that dispenses with the clutch, allowing for smooth starts without causing damage to said clutch.

Preferred embodiments of said assembly are detailed in the claims dependent on said claim 1.

According to a first embodiment, the continuous mechanical transmission system, hereinafter referred to as the system, which is intended to operate in a vehicle, comprises:
- a *primary shaft configured to provide power;*
- *a continuously variable transmission connected to the primary shaft and to a secondary shaft;*
- *a first epicyclic gear connected by its sun gear, that is, by its input, to the primary shaft;*
- *a beta gear connected to the ring gear of the first epicyclic gear;*
- *a second epicyclic gear connected by its sun gear, that is, by its input, to the planetary carrier, that is, by the output of the first epicyclic gear, by its ring gear connected to the primary shaft and by its planetary carrier connected to an output shaft;*
- *an alpha gear connected to the secondary shaft and meshed with the beta gear; and*
- *an electric machine connected to the secondary shaft, such that said electric machine is configured to power an energy accumulator and*/*or the output shaft.*

According to this embodiment, the system essentially consists of two parts. The first part is a continuously variable transmission, hereinafter referred to as CVT, which, as its name indicates, is the variable element of the system, and generally has two shafts, a primary or driving shaft and a secondary or driven shaft. The second part has a pair of gears, primary and secondary gears, between the two shafts of the CVT and epicyclic gears.

The system therefore essentially has three shafts, the primary shaft preferably being concentrical with the output shaft and the secondary shaft being parallel to the primary shaft.

This arrangement exhibits three very important advantages over a conventional (manual or automatic) gearbox, or a CVT. Firstly, for a given CVT ratio, the output shaft is stopped, even if the primary shaft continues to rotate, so the proposed starts have the primary shaft rotating while the vehicle is stationery and gain speed by changing CVT development, with there being no relative speed between the shafts throughout the process. Secondly, for higher values of the CVT ratio, reverse gear is available without the need for any additional system. In addition, close to front dead centre, ultra-short transmission ratios are available, so that with little torque provided by the engine, very high torque is available at the output.

However, as the transmission system is conceived, there is a recirculation of power, which consists of redirecting some power from the epicyclic gears to the CVT, which has two effects, depending on the recirculated power. When that power is less than the input power through the primary shaft, this fact is favourable since the CVT, the element that has the lowest mechanical performance, will manage less power than in a conventional transmission. However, if the recirculated power is greater than the input power, there will be more mechanical losses than in a traditional transmission.

Therefore, in this first embodiment, in order to manage the recirculated power, the system comprises the electric machine connected to the secondary shaft, such that said electric machine is configured to power an energy accumulator and/or the output shaft. Advantageously, all the power extracted by the electric machine does not circulate through the CVT, and mechanical losses of the assembly are therefore reduced.

Alternatively, the system comprises a drive engine and the aforementioned electric machine which, working together, are intended to optimise the operation of both the engine and the transmission.

The engine can be located either at the input, connected to the primary shaft, or at the output, connected to the output shaft. Advantageously, in any of the engine locations, the system operates in a manner similar to a traditional transmission, with the advantages gained above, i.e., no clutch for starting and little mechanical loss over long ranges.

However, the most notable advantage of the electric machine being coupled to the secondary shaft is that it reduces the recirculated power by generating electrical energy. Therefore, if the engine is at the output, this energy can be directed directly to that engine in continuous operation, whereas if the drive engine is coupled to the primary shaft at the input, said energy can be stored in an energy accumulator to be used over long ranges.

Advantageously, the recirculated power would not be lost as the mechanical power would be transmitted in the form of electrical power to an energy accumulator, for example, a battery or the like, so that it can be used by the drive engine or other traction engines of the vehicle at times when the power demanded is greater than that available, increasing system efficiency.

In an alternative embodiment, the electric machine is a generator, whereas the drive engine is a thermal and/or electric engine.

The invention also includes a vehicle that includes the continuous mechanical transmission system described herein.

### Brief description of the figures

The foregoing and other advantages and features will be more fully understood from the following detailed description of exemplary embodiments with reference to the accompanying drawings, which should be considered by way of illustration and not limitation, wherein:

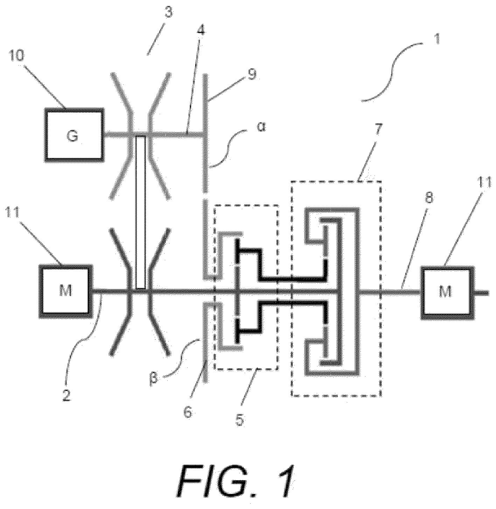

Figure 1 is a schematic depiction of a first embodiment of the continuous mechanical transmission system.

### Detailed description of an exemplary embodiment

In the following detailed description, numerous specific details are set forth in the form of examples to provide a thorough understanding of the relevant teachings. However, it will be apparent to those skilled in the art that the present teachings can be implemented without such details.

As can be seen in Figure 1, the present invention provides a continuous mechanical transmission system (1) comprising a primary shaft (2) to which a continuously variable transmission (3), hereinafter referred to as CVT (3), is connected, wherein the system (1) comprises a secondary shaft (4) that corresponds to a secondary or driven shaft of said CVT (3) and an alpha gear (9) connected to said secondary shaft (4). The system (1) also comprises a first epicyclic gear (5) with its input, that is, its sun gear, connected to the primary shaft (2) and a beta gear (6) connected to the ring gear of said first train (5) and in turn meshing with the alpha gear (9). The system (1) further comprises a second epicyclic gear (7) with an input, that is, its sun gear, connected to the planetary carrier of the first epicyclic gear (5), said second epicyclic gear (7) being connected by its planetary carrier to an output shaft (8) and an electric machine (10) connected to the secondary shaft (4), such that said electric machine (10) is configured to power an energy accumulator and/or the output shaft (8).

In a preferred embodiment, the beta gear (6) is incorporated into the first epicyclic gear (6), such that said beta gear (6) is integrated into the ring gear of said first gear (6) as an external gear with respect to said ring gear.

As seen in Figure 1, the system comprises a drive engine (11) connected to the output shaft (8), such that the electric machine (10) is enabled to power said drive engine (11), or alternatively, the drive engine (11) is connected to the primary shaft (2) such that the energy accumulated in the accumulator is injected into the output shaft (8).

In preferred embodiments, the electric machine (10) is a generator, whereas the drive engine (11) is a thermal and/or electric engine.

In a non-illustrated embodiment, the invention discloses a vehicle including the continuous mechanical transmission system (1) described herein.

## Claims

1. A continuous mechanical transmission system (1) comprising
- a primary shaft (2);
- a continuously variable transmission (3) connected to the primary shaft (2) and to a secondary shaft (4);
- a first epicyclic gear (5) connected by its sun gear to the primary shaft (2);
- a beta gear (6) connected to the ring gear of the first epicyclic gear (5);
- a second epicyclic gear (7) with its sun gear connected to the planet carrier of the first epicyclic gear (5), the ring gear of said second gear (7) being connected to the primary shaft (2) and the planetary carrier of said second gear (7) being connected to an output shaft (8);
- an alpha gear (9) connected to the secondary shaft (4) and meshing with the beta gear (6); and
- an electric machine (10) connected to the secondary shaft (4), such that said electric machine (10) is configured to power an energy accumulator and/or the output shaft (8).

2. The system (1) according to any of the preceding claims, comprising a drive engine (11) connected to the output shaft (8), such that the electric machine (10) is enabled to power said drive engine (11).

3. The system (1) according to claim 1, comprising a drive engine (11) connected to the primary shaft (2) such that the energy accumulated in the accumulator is injected into the output shaft (8).

4. A vehicle **characterised in that** it comprises the continuous mechanical transmission system (1) according to claims 1 to 3.
